Europäisches Patentamt

European Patent Office

Office européen des brevets

(11) Numéro de publication: **0 424 258 A1**

# DEMANDE DE BREVET EUROPEEN

(21) Numéro de dépôt: **90402923.8**

(22) Date de dépôt: **17.10.90**

(51) Int. Cl.⁵: **B05D 1/20,** B44C 1/175, C04B 41/45

(30) Priorité: **17.10.89 FR 8913661**

(43) Date de publication de la demande:
**24.04.91 Bulletin 91/17**

(84) Etats contractants désignés:
**AT BE CH DE DK ES FR GB GR IT LI LU NL SE**

(71) Demandeur: **Seailles, Pierre**
**29 Rue de Saint Cyr, Le Bouc Etourdi**
**F-78730 Longvilliers(FR)**

Demandeur: **Seailles, Brigitte**
**29 Rue de Saint Cyr, Le Bouc Etourdi**
**F-78730 Longvilliers(FR)**

(72) Inventeur: **Seailles, Pierre**
**29 Rue de Saint Cyr, Le Bouc Etourdi**
**F-78730 Longvilliers(FR)**
Inventeur: **Seailles, Brigitte**
**29 Rue de Saint Cyr, Le Bouc Etourdi**
**F-78730 Longvilliers(FR)**

(74) Mandataire: **Phélip, Bruno et al**
**c/o Cabinet Harlé & Phélip 21, rue de La**
**Rochefoucauld**
**F-75009 Paris(FR)**

(54) **Procédé de transfert par flottation d'un décor sur un objet, dispositif pour la mise en oeuvre de ce procédé et produits obtenus.**

(57) L'invention concerne l'obtention d'un décor re- productible par flottation d'un décor-modèle à la surface d'un liquide, dans laquelle on utilise un "objet-texte" de surface sensiblement plane ou non plane avec des motifs variés à volonté; on pulvérise sur l'objet-texte des colorants en poudre en suspension dans un liquide-véhicule; on plonge l'objet ainsi obtenu dans un liquide, généralement de l'eau, de manière que les pigments ou autres colorants surnagent à la surface du liquide sous forme d'un film- texte, et l'on transfère ledit film-texte sur le support final.

L'invention concerne aussi un dispositif de mise en oeuvre du procédé ainsi que les objets-texte plans ou non-plans mis en oeuvre dans les procédé et dispositif et les supports ou objets décorés.

Pas de dessin.

La présente invention concerne un procédé pour le transfert par flottation d'un décor sur des supports objets, notamment des verres, pièces de céramique etc. éventuellement destinés à subir une cuisson. L'invention a également pour objet des dispositifs pour la mise en oeuvre de ce procédé.

On a déjà proposé à cet effet, de former à la surface d'un bain liquide (en général de l'eau) des décors flottants recueillis sur divers supports sur lesquels ils se fixent. Parmi les procédés connus, on citera en particulier celui décrit par le brevet français N° 1137346 demandé le 16 juin 1954 au nom de Jean-Charles SEAILLES. Dans ce brevet, le cas spécialement décrit est celui où le décor flotte et doit être incorporé dans une matière pouvant l'imprégner postérieurement à son dépôt sur un support approprié. Dans toutes ces techniques connues, les pigments, les couleurs et encres sont d'abord mis en suspension ou en solution dans des liquides tels que des huiles, vernis, solvants, etc., qui sont ensuite déversés sur l'eau en créant à sa surface un film souvent de consistance huileuse et dans lequel le hasard joue le rôle essentiel dans la répartition finale des couleurs et donne une image de tachisme au décor obtenu. Autrement dit les méthodes connues de décoration par flottation ne permettent aucunement d'obtenir sur l'eau un film portant des lignes prédéterminées comme celles d'un dessin ou d'une image précise, et encore moins de répartir d'une façon volontaire les couleurs (comme on le fait en lithographie, sérigraphie, etc.)

L'invention a pour but, entre autres, de supprimer le caractère aléatoire des décors fournis par les procédés connus précités, et d'obtenir au contraire, par flottation, un film dont les graphismes et les couleurs, aussi complexes soient-ils, peuvent être totalement induits et contrôlés, le tout à volonté. On peut ainsi d'une part produire en série, ce qui est toujours intéressant du point de vue économique, et d'autre part, dans certains cas, introduire en cours d'opération toutes corrections et transformations éventuelles désirées. En étudiant la question, on a eu l'idée, qui est la base de l'invention, de préparer une matrice ou forme imprimante plane ou non plane (dénommée "objet-texte" dans la suite de la description), puis de l'encrer, de plonger le "texte" encré dans un bain de liquide pour former, par flottation, à la surface de celui-ci un "film-texte" reproduisant fidèlement les graphismes du "texte" et enfin de transférer sur un support final ledit film-texte. Les essais effectués ont établi que, dans ces conditions, d'une part le but recherché comme précité était parfaitement atteint et d'autre part que l'objet-texte pouvait, entre de larges limites, avoir une surface plane ou au contraire une surface à reliefs très irréguliers. Cette constatation, de prime abord parfaitement inattendue, découlait en effet des informations fournies par les méthodes courantes d'impression dans lesquelles on doit veiller soigneusement à la régularité et à la faible valeur des reliefs admis sur les matrices utilisées de surface parfaitement plane. Cette surface irrégulière caractéristique du procédé objet de l'invention permet d'une manière très simple d'apporter des corrections ou des modifications à l'objet-texte, éventuellement des changements d'échelle totaux ou locaux, ce qui étend largement les possibilités de mise en oeuvre du procédé. On peut d'ailleurs associer les deux types d'objets-texte en une seule surface. Dans le cas ou "l'objet-texte" est dit plan, toute surface relativement plane convient; les reliefs ne sont soumis à aucun impératif de planéité horizontale ou de dimensions et contrairement aux habitudes de l'imprimerie, les dénivellements de l'ordre de 4 à 5 mm sont très acceptables ainsi que les distorsions de l'ensemble du relief. A titre d'exemple de "surfaces" utilisables, on peut citer des bas reliefs d'art, gravures, clichés, des écorces d'arbres, des fleurs, des coquillages ou tous assemblages de tels objets pour former une surface relativement plane. Si l'on désire un objet-texte non plan, tout objet naturel ou artificiel, par exemple des branches d'arbres, des herbes plus ou moins desséchées, des feuillages ou des sculptures ou des assemblages de fil de fer, de grillage, de filets, d'étoffes, d'objets divers (à la condition de ne pas présenter une apparence trop massive) peut être utilisé. Il n'y a pas de limites fixées pour la grandeur et la forme des objets utilisables, mais, en général, l'épaisseur des objets-texte ne dépasse pas environ 30 cm et quant à leur surface, elle ne dépasse généralement pas 1/2 mètre carré, afin d'être facilement maniable. Une fois terminée la préparation de l'objet-texte, plan ou non, (qui serait la matrice ou la forme imprimante en imprimerie) il y a lieu de procéder à l'encrage. Les produits utilisés pour l'encrage sont des pigments usuels, soit en poudre sèche soit en suspension dans un véhicule liquide approprié constitué de solvants généralement additionnés de liants (huiles, essence grasse etc.) . Les véhicules liquides sont faits d'un solvant principal soit miscible à l'eau (tels que alcool, esters, acétone...) avec addition de liants tels que huile de lin, essence grasse et de vernis divers, soit plus ou moins miscible à l'eau (huiles, vernis, graisses), plus ou moins dilués dans leurs solvants - qui sont en général des hydrocarbures - bien entendu les deux types de ces véhicules peuvent être mélangés; des essais simples permettent alors de "doser" les mélanges. Les pigments et le véhicule doivent être énergiquement agités pour bien séparer les grains de pigment pour former une suspension permanente dans le véhicule liquide pendant l 'encrage.

Dans l'invention, l'encrage se fait par pulvérisation sèche ou aqueuse des diverses couleurs, simultanément ou à la suite les unes des autres. Pour l'encrage avec des pigments secs on pulvérise séparément sur l'objet-texte le véhicule liquide et les pigments. Il y a intérêt à pulvériser au moins deux couleurs. Il est important de noter que, l'objet-texte étant maintenu en position fixe, les pulvérisations peuvent être faites d'un quelconque côté du texte, ou que l'on peut déplacer le texte par rapport aux pulvérisateurs, ce qui peut être très avantageux dans les opérations mécaniques ou mêmes manuelles de travail. Suivant une autre caractéristique, il est bon de pulvériser les couleurs foncées plus abondamment en dirigeant le jet vers l'un des côtés de l'objet-texte et de diriger ou de projeter le jet de pulvérisation des couleurs plus claires vers l'autre côté du texte. Dans ces conditions, la totalité des surfaces du texte sera de façon sûre recouverte de pigments. Enfin, on peut "jouer" avec les tonalités contrastantes des couleurs pulvérisées pour obtenir par des jeux de lumière des effets de "grande fidélité" de reproduction et des apparences de reliefs en trompe l'oeil. Une règle supplémentaire est que pour les objets-texte "plans", il est préférable de diriger les jets presque parallèlement à la surface du "texte". Le temps nécessaire pour "encrer" un texte de dimension normale ne dépasse pas 5 min lorsque l'on opère de façon artisanale et est sensiblement plus faible lorsque l'on dispose d'appareillages automatiques qui seront décrits plus loin. L'encrage de l'objet-texte étant terminé, plan ou non, on procède à l'impression proprement dite qui est réalisée en deux opérations successives, à savoir: premièrement, le transfert des pigments de l 'objet-texte sur la surface de l'eau contenue dans un récipient approprié, et deuxièmement, le transfert du film sur le support définitif. Après la première opération le "texte" à imprimer flotte sur la surface de l'eau en formant le "film-texte"; celui-ci est alors transféré sur le support définitif, à la manière connue, par exemple par le brevet français SEAILLES précité n° 1137346 ou de préférence par des moyens automatiques. Il est en général avantageux de constituer à la surface du liquide (essentiellement de l'eau) un film de prétraitement ne présentant pas de résistance tel qu'une mince couche de talc, ou de paraffine, ou de cire d'huile et.... ou de "film cassant" (voir ci-après)

Dans le liquide contenu dans un récipient de dimensions appropriées à celles des supports à décorer, et recouvert de cette dernière couche de prétraitement (qui pourrait le cas échéant être elle-même un film-texte) on enfonce par tous moyens l'objet-texte. Au fur et à mesure de l'immersion, les encrages pulvérisés se séparent de l'objet texte et flottent en "film-texte" qui reproduit fidèlement les graphismes de l'objet-texte.

L'immersion progressive détruit partiellement le film de prétraitement qui tombe tout simplement au fond du récipient. La partie non déplacée du film de prétraitement maintient le film-objet à la surface de l'eau en empêchant toute déformation du film-texte entouré sur tous ses côtés et dès lors susceptible d'être transféré sur son support définitif intact et fidèle.

Dans le cas d'un objet-texte non plan celui-ci peut présenter à cause de ses nombreux "reliefs" un grand nombre de côtés par lesquels il peut être enfoncé dans l'eau. Après avoir été encré sur ces côtés, en fonction de ses reliefs (branches d'arbre, sculpture ou autres) cet objet-texte déposera sur la surface de l'eau des graphismes sous forme de film-texte différents selon le côté par lequel il aura été enfoncé dans l'eau et chaque fois nouveaux (comme une sculpture qui peut être regardée ou photographiée de divers côtés).

En effet, si on déplace parallèlement à la surface de l'eau, au fur et à mesure qu'on l'immerge, cet objet-texte non plan (petit arbre bonzai, sculpture, motif sculptural en fil de fer...), les premières parties dudit objet-texte détruisent le film de prétraitement (s'il y en a un) et déposent à sa place un film-texte. Ensuite, au cours de la poursuite de l'immersion, d'autres parties du film-texte sont déposées qui détruisent ou déplacent, totalement ou partiellement, les films-texte précédemment déposés en les remplaçant par leurs graphismes respectifs et ainsi de suite jusqu'à l'immersion complète de l'objet-texte. En changeant de "côté immergé" on peut donc changer, pratiquement à volonté, à vue ou après quelques essais, le graphisme final. D'une part, on est loin des résultats "tachistes" aléatoires obtenus par les procédés connus et d'autre part on maîtrise les séries éventuellement désirées susceptibles d'être obtenues à partir d'un objet non plan.

Les films-texte flottant sur la surface de l'eau doivent alors être transférés sur leur support définitif. Ces supports peuvent être ceux qui sont déjà visés par les techniques connues telles que le brevet SEAILLES précité. Pour qu'ils soient utilisables selon l'invention, il suffit que la surface de ces supports permette l'adhérence du film en cause. Le transfert du film texte s'effectue généralement par cueillette manuelle ou mécanique. On rappelle que la cueillette bien connue en soi consiste à introduire le support sous la surface du bain et à le remonter progressivement pour prélever par soulèvement une partie ou la totalité du décor formé sur la surface de l'eau. On sait qu'il est préférable de donner au support une légère inclinaison par rapport à la surface du bain liquide. On peut consolider ou fluidifier le film-texte alors qu'il flotte encore sur la surface du liquide, en pulvérisant un vernis ou tout autre liquide approprié. On peut évidemment aussi procéder par double transfert en déposant d'abord le film texte sur un support intermédiaire auquel ledit film-texte n'adhère que faiblement (après avoir été éventuellement consolidé par un vernis approprié). Ensuite, on peut transférer sur un support définitif par collage ou autrement, en totalité ou en partie.

Pour faciliter la mise en oeuvre du procédé selon l'invention, il est bon de classer les films-texte en fonction de leur consistance à la surface de l'eau comme suit:

a) films-texte souples et élastiques,
b) films-texte cassants,
c) films-texte à grande cohésion.

a) Films souples et élastiques: ces films (solvants plus liant mais sans poudre) sont resserrables et expansibles. Si un tel film recouvre la totalité de l'eau contenue dans un récipient et si l'on rapproche ou écarte les parois du récipient, l'épaisseur du film varie mais recouvre d'une manière homogène la totalité de la surface disponible entre les parois du récipient. On ajoute à ces films des poudres pigments et les films ainsi obtenus conservent une part importante de leurs propriétés notamment en ce qui concerne le rétrécissement. Ainsi donc tout graphisme du film-texte s'agrandit ou se retrécit en fonction des positions des parois (anaphonisme). Ces films souples sont en général obtenus à partir de véhicules dont le principal solvant (alcool) est miscible à l'eau et auquel sont ajoutés divers liants tels que huiles (de lin, de paraffine...) des solvants (essences diverses ou graisse, glycérine...) et divers produits à pouvoir graissant ou collant (cires, résines, certains vernis) . Dans ce type de films, les particules de colorant flottant à la surface de l'eau, sont enrobées et entourées d'une fine pellicule plus ou moins huileuse et collante, et la cohésion du film est très différente de celle des films cassants. A titre d'exemple, de tels films peuvent soit légèrement s'agrandir, soit se réduire en surface d'environ un tiers des dimensions originelles, sans déformation ni hystérésis. Ces propriétés font que lesdits films peuvent subir à la surface de l'eau de nombreuses déformations, manipulations, déplacements partiels du film, additions de pigments, etc..., le graphisme restant lisible et reconnaissable. Ceci offre un intérêt certain pour établir l'appartenance à une même famille ou à une même origine industrielle. Ces films souples et expansibles sont d'emploi très nombreux grâce à ces propriétés; ils conviennent particulièrement bien à l

décoration de céramiques, faïences et porcelaines.

b) Films cassants: ils sont réalisés à partir d'un véhicule ("alcool") avec peu ou pas de liant. Les particules de colorants sont ici simplement posée côte à côte sur la surface de l'eau; leur cohésion est due aux faibles tensions superficielles. Ils peuvent ainsi servir de films de prétraitement de la surface de l'eau. Ils cassent à l'extension et prennent des plis au resserrage. Ces films de prétraitement cassants peuvent être incolores et transparents, contenir des pigments colorés, comporter un graphisme c'est-à-dire être des films-texte cassants. En outre, ils peuvent être totalement détruits lors de l'enfoncement de l'objet-texte dans l'eau, ne jouant alors que le rôle de maintenir le film-texte sur une surface limitée de l'eau du récipient. Enfin, ils peuvent n'être que partiellement détruits par l'enfoncement de l'objet-texte si celui-ci présente des discontinuités (par exemple des branches d'arbres). Si le film de prétraitement comporte une coloration, ou un graphisme, cette coloration ou ce graphisme restera donc apparent dans les zones de discontinuité et sera inclus dans le film-texte en l'enrichissant d'effets décoratifs qui peuvent être importants.

c) Films-texte à grande cohésion: ils sont réalisés à partir de véhicules comprenant des liants durcissant rapidement, par évaporation des solvants ou par polymérisation, dès lors. qu'ils sont au contact de l'air.

Ces films ne sont ni cassants, ni resserrables, ni desserrables. Ils forment plus ou moins vite à la surface de l'eau un film durci et donc non déformable; cette dernière caractéristique peut être précieuse si l'on est pratiquement tenu à éviter toute déformation du film-texte.

Il est bien clair que les démarcations précises entre les trois types de films précités ne sont pas nettes. En fait, on passe graduellement des films cassants (c'est-à-dire sans liants) à des films de plus en plus souples (par addition de solvants et de liants appropriés) . Des essais permettent aisément de trouver les mélanges répondant à un besoin donné.

On trouvera ci-après divers moyens de préparer les objets-texte (plans ou non-plans) puis un exemple de réalisation d'un dispositif pour la mise en oeuvre mécanique du procédé de l'invention. Pour un objet-texte plan, on utilise ou on fabrique un bas-relief, avantageusement en plâtre, d'une surface d'environ 2.000 cm² qui représente tout motif désiré et dont les reliefs ne dépassent pas 1 cm environ. Lorsque l'on prévoit une mise en oeuvre manuel le du procédé, on munit le bas-relief de deux poignées de manipulation. La masse du bas-relief ne doit pas être trop grande afin qu'il puisse être facilement maintenu horizontal par ces poignées.

Dans le cas d'un objet-texte non plan on peut utiliser un grillage à larges mailles (par exemple du type grillage à poulailler) ayant une surface d'environ 45 cm de côté. On maintient ce grillage à plat et on pose sur lui ce qui est prévu pour fournir le motif à imprimer, par exemple quelques branchages, bien fournis en branches fines et ayant un aspect décoratif du type bonzai, préalablement nettoyés et lavés. Ces branchages sont disposés de manière à recouvrir la quasi-totalité de la surface du grillage sur une épaisseur comprise entre 0 (zone sans branche éventuelle) et 15 cm. Les différentes branches peuvent s'entremêler et afin que l'ensemble grillage-branches soit bien solidaire et puisse être manipulé, on prévoit de minces fils fins de cuivre pour maintenir fermement les branches contre le grillage. Rien n'empêche de comprimer légèrement l'ensemble "objet-texte" pour assurer cette solidarité. La densité de l'ensemble doit être suffisante pour qu'il s'enfonce naturellement dans le liquide (eau du réservoir de traitement), et il peut éventuellement être lesté à cet effet. Dans le cas d'une opération manuelle de transfert, on attache au grillage deux fils de fer servant à maintenir l'ensemble au-dessus de l'eau et à le faire descendre lentement.

Un autre exemple d'objet-texte non plan peut être obtenu à partir d'une toile métallique à tamis à mailles fines d'environ 50 à 60 cm². Cette toile est froissée, pliée et éventuellement découpée, de manière à présenter une surface complexe de creux, bosses et plis dont les dénivellations sont de l'ordre de 0 à 8 cm environ et dont la surface après froissement est de 2.000 cm² environ.

Dans sa forme la plus générale, un dispositif pour la mise en oeuvre du procédé selon l'invention est caractérisé en ce qu'il comporte: un récipient contenant le liquide de flottation du film-texte, des moyens pour plonger et faire descendre dans le liquide un objet-texte plan ou non plan préalablement encré de manière que les colorants prédéposés sur ledit objet surnagent à la surface de l'eau pour former le film-texte, des moyens pour amener le support à décorer sous la surface où surnage le film-texte et pour faire remonter ce support jusqu'à ce qu'il reprenne ledit film-texte, des moyens pour sortir le support décoré, ainsi que des moyens pour ressortir l'objet-texte du liquide pour permettre au besoin son nouvel encrage avant une nouvelle plongée en vue d'une fabrication en série.

Un tel dispositif peut par exemple comporter un bac contenant de l'eau, éventuellement additionnée de solvants ou de nettoyants dans lequel sont entraînés en rotation dans deux plans perpendiculaires d'une part, dans le plan horizontal, des moyens pour supporter l'objet encré et d'autre part, dans le plan vertical, pour assurer progressivement l'immersion de l'objet-texte dans l'eau de manière à déposer le film-texte sur la surface de l'eau et par inversion de rotation, des moyens (objet à décorer) pour reprendre par dessous le film-texte déposé sur la surface de l'eau, ces derniers moyens étant commandés en mouvement descendant et ascendant et en inclinaison en fonction des déplacements du porte objet-texte et en rotation pour assurer la mise en position respective du porte-objet-texte encré puis du cueilleur de film-texte sur la surface de l'eau.

On a décrit ci-dessous la préparation d'un objet-texte quant à son encrage préliminaire à l'impression sur un support. L'objet-texte comportant le graphisme à transférer selon l'invention est rendu aussi propre que possible, et posé sur un support approprié, de préférence dans une cabine de pulvérisation, de manière que les pulvérisations puissent au besoin être faites des deux côtés de l'objet-texte. On prépare d'abord le véhicule des colorants, en mélangeant par exemple à 1 litre d'alcool absolu dénaturé environ 10 cc d'essence grasse (concentration d'essence de térébenthine) plus 50 cc d'essence C, puis 5 cc d'essence de térébenthine, plus 5 cc d'huile de lin décolorée. Pour une opération artisanale utilisant 6 pigments par exemple, on met dans 6 flacons environ 20 grammes de l'un des pigments généralement en suspension dans environ 40 à 50 cc du véhicule précité en agitant énergiquement, par exemple avec un agitateur mécanique pour maintenir l'homogénéité de la suspension. Les pigments peuvent éventuellement être pulvérisés séparément sur l'objet-texte en commençant de préférence par la pulvérisation du véhicule. Si le support sur lequel est recueilli le film-texte, doit supporter une cuisson (pour une céramique, verre ou autre) les pigments utilisés peuvent naturellement être des pigments adéquats à une cuisson; on observera que les pigments retenus peuvent être traités pour augmenter leur flottabilité ce qui est en général le cas pour les pigments utilisés sur des céramiques (mais jamais de pigments organiques qui ne supporteraient pas la température de cuisson). Un septième flacon ne contiendra que le véhicule sans pigment (environ 30 c³). On pulvérise successivement sur l'objet-texte les diverses suspensions de pigments dans le véhicule. Dans le cas d'un objet-texte plan, la pulvérisation se fait de préférence sous un axe proche de l'horizontal. Les couleurs sombres sont de préférence d'un côté de l'objet-texte et les couleurs claires du côté opposé de manière à recouvrir sans excès la totalité de l'objet du texte de pigments. On pulvérise le contenu du septième flacon sur la surface du bain qui est ainsi couverte d'un film de cohésion parfaite. On plonge alors l'objet-texte encré dans le liquide, comme déjà indiqué, et le support final est amené sous le film-texte qui se dépose sur la surface du support.

Pour un objet-texte non plan, on pulvérise successivement les divers colorants prévus, en inclinant chaque fois le pulvérisateur selon l'inclinaison des surfaces-reliefs de l'objet-texte. Dans ce cas on peut souvent avoir avantage à disposer l'objet-texte verticalement pour permettre une pulvérisation des deux côtés de l'objet.

Dans les dessins annexés:
- Fig. 1 est une vue par dessus d'un objet plan disposé pour être pulvérisé, les fils F supportent l'objet et les couleurs sont projetées sous un angle de 15 à 35 degrés, la couleur noire étant pulvérisée verticalement et en petite quantité.
- Fig. 2 représente un objet non plan suspendu verticalement par deux fils F, les pulvérisations étant effectuées suivant les flèches sous des angles donnant respectivement une inclinaison donnée pour les diverses "surfaces" du non-plan.
- Fig. 3 à 8 représentent un exemple de dispositif mécanique pour la mise en oeuvre du procédé de l'invention, savoir:

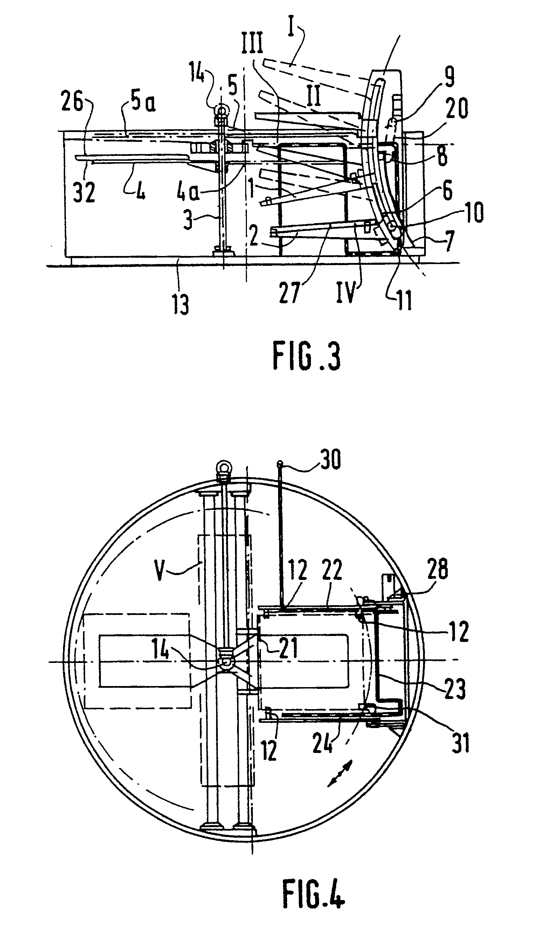

- Fig. 3 est une coupe transversale montrant le dispositif de transfert composé essentiellement d'un élévateur oscillant et d'un serveur muni de deux plateaux pivotant autour d'un axe vertical. Le tout est placé dans une cuve cylindrique remplie d'eau dans laquelle le "film-texte" doit flotter.

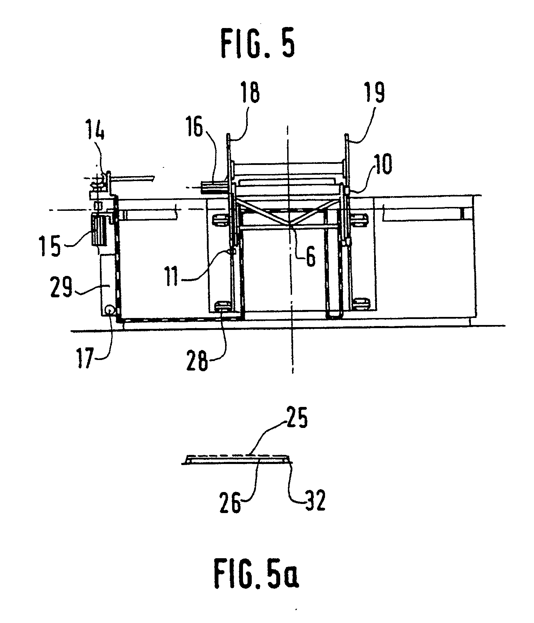

- Fig. 4 est une vue en plan, montrant un plateau du serveur chargé de "l'objet-texte", l'autre plateau étant dans la position de réception de l'ancien "objet-texte" après dépôt du "film-texte" sur l'eau.
- Fig. 5 représente une coupe transversale montrant le circuit d'eau et d'air nécessaire au maintien du "film-texte" en position entre les bras de l 'élévateur.

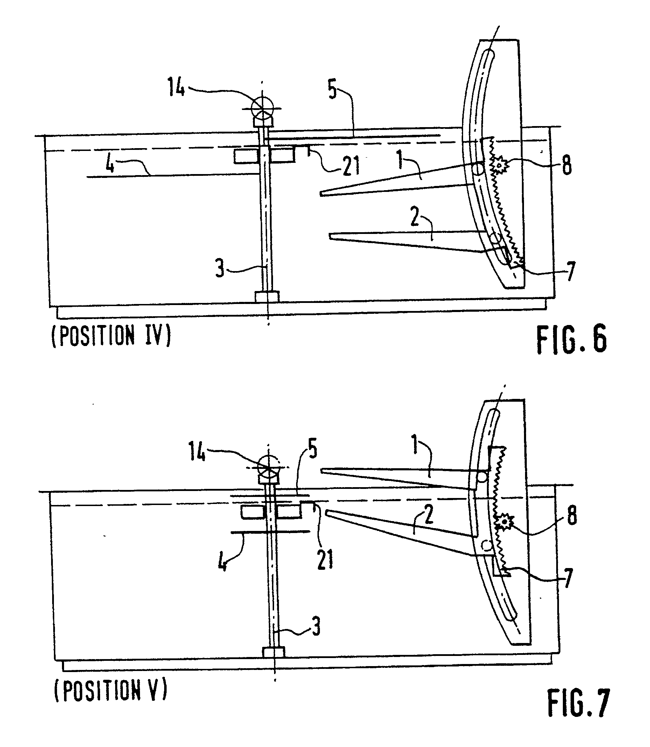

- Fig. 6 à 10 représentent le film-texte dans les positions IV, V, I, II et III.

En se référant aux figures 3 à 5, on voit que le dispositif de transfert se compose essentiellement d'un élévateur se déplaçant dans un plan vertical et d'un serveur pivotant autour d'un axe vertical 3.
- l'élévateur comprend deux paires de bras 1 et 2 rendus solidaires par deux flasques sur lesquels seront fixés les galets de guidage et la crémaillère pour la translation. Une structure, par exemple en mécano soudé 6, maintient d'une façon indéformable les deux paires de bras à l'écartement désiré (environ 1,2 mètre pour déposer un film-texte de 1 mètre carré).
- le serveur comprend deux plateaux 4 et 5 destinés à recevoir les "objets-texte". Le serveur et son mécanisme de rotation sont maintenus en position par deux profilés fixés à la cuve cylindrique 13. Sur l'un des profilés est installée la lisse 21 qui sert à maintenir à sa place le graphisme déposé sur l'eau.

L'ensemble est placé dans une cuve cylindrique 13 remplie d'eau, de diamètre suffisant pour permettre de déposer un "film-texte" de l'ordre du mètre carré.

L'élévateur est guidé en translation par les flancs fixes 18 et 19 par l'intermédiaire des galets 10, positionnés dans l'évidement circulaire de chaque flanc fixe. Quatre galets anti-déversement 11, fixés deux par deux sur chaque bras de l'élévateur, empêchent tout déplacement transversal de l'élévateur pendant sa translation. Cette absence de déplacement transversal est nécessaire au moment où le film-texte est déposé sur l'eau. L'élévateur est mû par un système pignon-crémaillère 8-7 asservis par un moteur 16 par l'intermédiaire d'une chaîne 20 et du pignon moteur 9. Pour des raisons de sollicitations mécaniques la crémaillère est placée sur le même côté de l'élévateur que les galets anti-déversement.

On voit en figure 3 un exemple du dispositif de transfert équipé d'un mécanisme permettant de faire varier l'angle d'inclinaison dans le sens descente de "l'objet-texte" puis, dans le sens montée, pour faire varier l'angle d'inclinaison du chargement (palette d'objets à décorer). Cet angle d'inclinaison peut être ajusté en modifiant la position des flancs fixes 18 et 19 en jouant sur les fixations des cornières 28. En figure 3 les flancs fixes sont en position verticale. La paire de bras 1 est équipée de pattes 12 et 13 pour assurer pendant la rotation de l'élévateur la prise du support "d'objet-texte". L'ensemble du support texte est composé d'un cadre support 26 reposant à l'aide de quatre pieds sur un lèche-frite 32 placé à 5 cm au-dessous du cadre support. Le lèche-frite a pour fonction de récupérer d'éventuelles saletés ou corps étrangers tombant dans l'eau par gravité, pendant le transfert du graphisme sur l'eau ou pendant le nettoyage de l'interface film/eau par les jets d'eau. Ainsi on supprime le dépôt de ces saletés ou corps étrangers sur les objets à décorer disposés sur la palette 27 située dessous.

Le serveur, comprenant un plateau supérieur sur lequel est déposé "l'objet-texte" et un plateau inférieur destiné à récupérer le même "objet-texte" après immersion dans l'eau, est guidé en rotation par des roulements et une butée à billes. L'ensemble est actionné par un moteur 15 par l'intermédiaire de deux couples coniques 14. La synchronisation des mouvements de l'élévateur et du serveur est assurée par des cames électriques 17 placées dans le boitier de commande 29 dont les fins de courses sont reliées aux moteurs 15 et 16 et à l'électro-vanne 30.

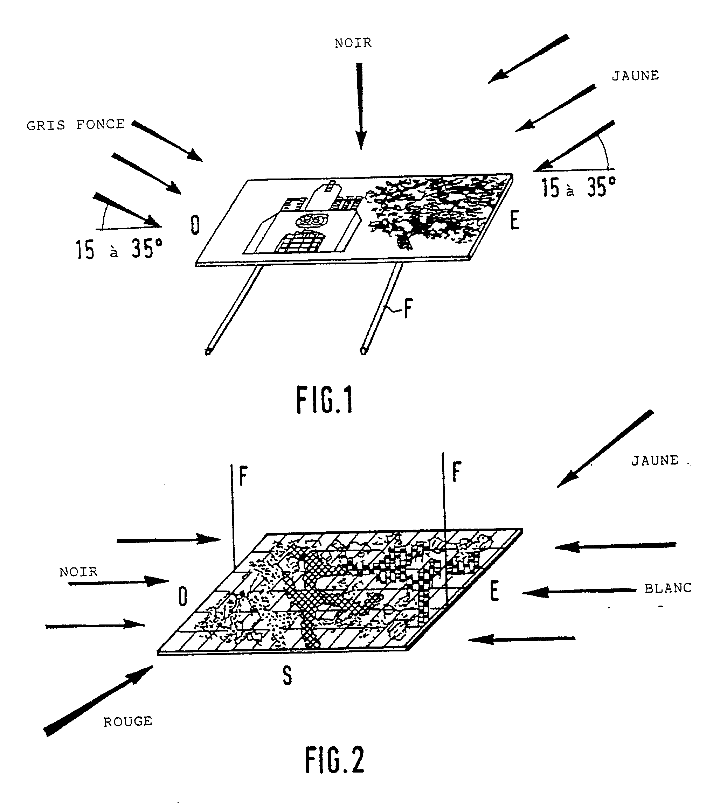

Le double circuit d'eau et d'air représenté (Fig. 2) encadre sur trois côtés 22, 23, 24, à l'intérieur des bras de l'élévateur, le film-texte déposé sur l'eau. Son rôle est triple a) par sa section rectangulaire formée de deux tubes carrés superposés de 8 mm d'arête, il empêche le "film-texte" de venir contre les bras de l'élévateur, b) il assure par un jet d'air émis par le tuyau supérieur le maintien du "film-texte" contre la lisse 21 ainsi que la réduction à l'échelle désirée du graphisme, c) il permet enfin, grâce à un courant d'eau émis à partir du tuyau inférieur, d'enlever des poussières ou autres constituants indésirables, ainsi que les bulles d'air, présents sous le "film-texte". Les deux circuits sont asservis par l'électro-vanne 30.

Le fonctionnement de ce dispositif est le suivant:

### 1 Position 1: Fig. 6

Initialement les bras 1, fig. 3 sont chargés d'un ensemble support "d'objet-texte" avec "l'objet-texte" et les bras 2 chargés avec une palette d'assiettes nues par exemple. Quand l'élévateur 7 est en cette position, le serveur, dont les plateaux 4 et 5 sont vides, est en position neutre. Cette position que l'on retrouve à chaque début et fin de cycle, est nécessaire pour laisser passer l'élévateur chargé à la descente de "l'objet-texte" et de la palette 27 d'objets décorés.

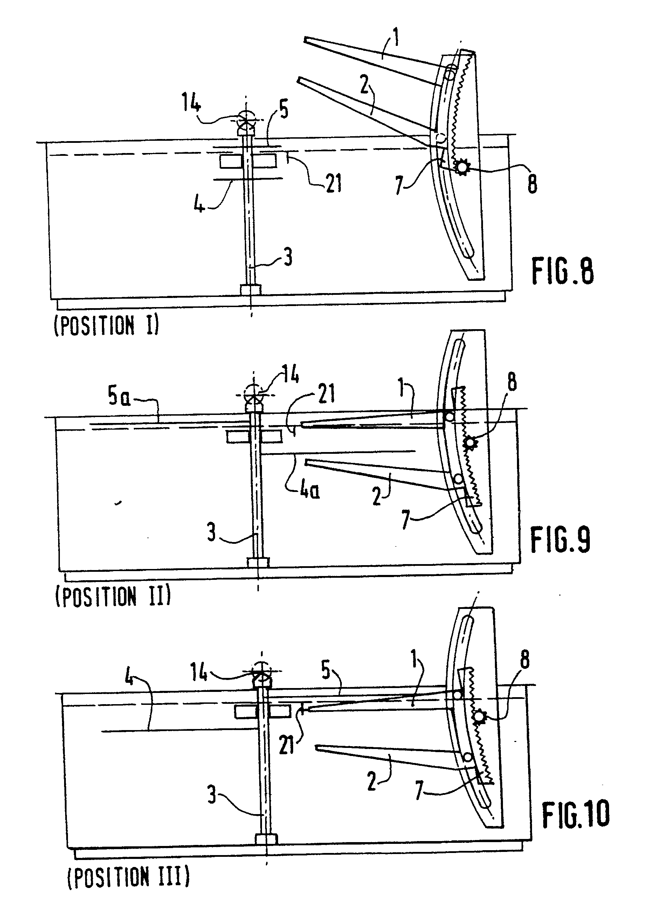

### 2 Position II: Fig. 7

Au cours de la descente de l'élévateur 7, le film-texte s'est déposé à la surface de l'eau. Simultanément et grâce à la synchronisation des rotations du couple conique 14 et du pignon 8, les plateaux 4 et 5 du serveur viennent respectivement en 4a et 5a. En continuant sa course, l'élévateur dépose le support de "l'objet-texte" sur le plateau 4a du serveur. Le plateau supérieur du serveur qui se trouve en 5a peut-être chargé avec le nouvel ensemble support "d'objet-texte".

### 3 Position III: Fig. 8

Pendant que l'élévateur termine sa descente, le serveur fait une rotation d'un demi-tour; dans cette position, le plateau supérieur du serveur 5a est placé entre les bras de l'élévateur en 5, tandis que le plateau inférieur du serveur situé en 4 peut être déchargé.

### 4 Position IV: Fig. 9

Dès que l'élévateur arrive en position basse IV, une came de fin de course inverse la rotation du pignon 8 pour faire remonter l'élévateur qui, au passage, enlève à l'aide des bras 1 le nouveau support de "l'objet-texte".

### 4 Position V: Fig. 10

L'élévateur continue sa montée de sorte que les objets à décorer (dans ce cas des assiettes) placés sur la palette chargée sur les bras 2 reçoivent le graphisme maintenu à la surface de l'eau. Simultanément comme en position 11 et grâce à la synchronisation des rotations du couple conique 14 et du pignon 8, les plateaux 4 et 5 vides du serveur viennent en position neutre (en corollaire des indications du paragraphe 1 ci-dessus, le serveur doit effectuer un quart de tour pour commencer ou terminer sa fonction). Quand l'élévateur arrive à la position 1 le dispositif est au point mort pour permettre le déchargement des bras 2 qui peut s'effectuer par poussée obtenue par l'arrivée de la nouvelle palette. Dès que la nouvelle palette est en place le cycle recommence.

## Revendications

1. Procédé pour l'obtention d'un décor reproductible comportant la flottation d'un modèle sur la surface d'un liquide caractérisé par le fait que l'on choisit ou fabrique un "objet-texte" de surface soit sensiblement plane, soit volumétrique (non plane) avec des motifs variés à volonté, que l'on pulvérise sur l'objet-texte des colorants en poudre en suspension dans un liquide-véhicule, que l'on immerge l'objet ainsi obtenu dans un liquide (généralement de l'eau) de manière que les pigments ou autres colorants surnagent à la surface du liquide sous forme d'un film-texte, et que l'on transfère ledit film-texte sur le support final.

2. Procédé selon la revendication 1, caractérisé en ce que la surface sensiblement plane de l'objet-texte est un dessin, un bas relief, des écorces d'arbres ou autres.

3. Procédé selon la revendication 1, caractérisé en ce que l'objet non plan est constitué de branches d'arbres, de feuilles plus ou moins desséchées, des sculptures, d'assemblages de fil de fer, d'étoffes, etc... déposés sur un grillage à larges mailles (grillage de poulailler par exemple), sur une épaisseur allant jusqu'à 15 cm environ et maintenu à plat, des moyens tels que des fils métalliques servant à maintenir le "motif" sur le treillage.

4. Procédé selon les revendications 1 et 2, dans lequel l'objet-texte plan est maintenu sur un grillage fin.

5. Procédé selon l'une au moins des revendications 1 à 4, caractérisé en ce que l'on pulvérise sur l'objet-texte des poudres-pigments soit sèches, soit plus généralement en suspension dans un véhicule liquide fait de solvants additionnés en général de liants, et plus ou moins miscibles à l'eau.

6. Procédé selon la revendication 4, caractérisé en ce que l'on pulvérise au moins deux couleurs, l'une foncée et l'autre claire, et que la pulvérisation est faite sous un angle d'environ 15 à 35 degrés pour un objet-texte plan et sous divers angles analogues pour toutes ou un certain nombre de "faces" présentées par un objet-texte non plan.

7. Procédé selon l'une quelconque des revendications précédentes caractérisé en ce que l'immersion est effectuée de préférence en inclinant l'objet-texte pendant au moins une partie de l'immersion.

8. Dispositif pour la mise en oeuvre du procédé selon l'une au moins des revendications 1 à 7, caractérisé en ce qu'il comprend un récipient contenant le liquide de flottation du film-objet, des moyens pour plonger et faire descendre dans le liquide un objet-texte plan ou non plan préalablement encré, de manière que les colorants prédéposés sur le film-objet surnagent à la suface de l'eau pour y former le film-texte, des moyens pour amener le support à décorer sous la surface où surnage le film-texte, et pour faire remonter ce support jusqu'à ce qu'il reprenne le film-texte, des moyens pour sortir le support décoré, ainsi que des moyens pour ressortir l'objet-texte du liquide pour permettre au besoin son nouvel encrage avant une nouvelle plongée en vue d'une fabrication en série.

9. Dispositif selon la revendication 8, caractérisé en ce qu'il comporte un bac, de préférence circulaire, pour l'eau éventuellement additionnée de solvants ou de nettoyants dans lequel sont entraînés en rotation, dans deux plans perpendiculaires, d'une part dans le plan horizontal des moyens pour supporter l'objet texte encré et d'autre part dans le plan vertical pour assurer progressivement l'immersion de l'objet texte sur la surface de l'eau, et par inversion de rotation, des moyens (objet à décorer) pour reprendre par dessous le film-texte déposé sur la surface de l'eau, ces derniers moyens étant commandés en mouvement descendant et ascendant et en inclinaison en fonction des déplacements du porte objet-texte et en rotation pour assurer la mise en position respective du cueilleur du film-texte sur la surface de l'eau, et des moyens pour prendre l'objet décoré.

10. A titre de produits industriels nouveaux, les objets-texte plans et non plans mis en oeuvre dans les procédé et dispositif selon les revendications l à 9.

NOIR

JAUNE

GRIS FONCE

15 à 35°

15 à 35°

O

E

F

FIG.1

F

F

JAUNE

NOIR

O

E

BLANC

S

ROUGE

FIG.2

FIG.3

FIG.4

## FIG. 5

## FIG.5a

EP 0 424 258 A1

(POSITION IV)

FIG. 6

(POSITION V)

FIG. 7

12

FIG.8

(POSITION I)

FIG.9

(POSITION II)

FIG.10

(POSITION III)

Office européen
des brevets

**RAPPORT DE RECHERCHE
EUROPEENNE**

Numéro de la demande

**EP 90 40 2923**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| D,A | FR-A-1 137 346 (J.-C. SEAILLES) * En entier * | 1,8,9 | B 05 D 1/20 B 44 C 1/175 C 04 B 41/45 |
| A | PATENT ABSTRACTS OF JAPAN, vol. 4, no. 12 (C-71), 29 janvier 1980; & JP-A-54 148 036 (TOPPAN INSATSU K.K.) 19-11-1979 | 1 | |
| A | PATENT ABSTRACTS OF JAPAN, vol. 9, no. 307 (M-435)[2030], 4 décembre 1985; & JP-A-60 143 961 (KIYUUBITSUKU ENG. K.K.) 30-07-1985 | 1 | |

**DOMAINES TECHNIQUES RECHERCHES (Int. Cl.5)**

B 05 D 1/20
B 44 C 1/175
C 04 B 41/45

Le présent rapport de recherche a été établi pour toutes les revendications

| Lieu de la recherche | Date d'achèvement de la recherche | Examinateur |
|---|---|---|
| La Haye | 09 janvier 91 | STROUD J.G. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

& : membre de la même famille, document correspondant